# FASCICULE DE BREVET EUROPEEN

(11) **EP 1 429 056 B1**
(45) Date de publication et mention de la délivrance du brevet: **01.03.2006**
(21) Numéro de dépôt: 03292845.9
(22) Date de dépôt: 17.11.2003
(51) Int. Cl.: F16H 61/36, F16H 63/38

(54) **Véhicule automobile équipé d'un dispositif de commande de boîte de vitesses magnétique**
Wählhebel für ein Kraftfahrzeug-Getriebe mit magnetischer Haltevorrichtung
Shift lever for a vehicular gear box with magnetique retaining means

(30) Priorité: 09.12.2002 FR 0215535
(43) Date de publication de la demande: 16.06.2004
(73) Titulaire: Peugeot Citroen Automobiles SA, 92200 Neuilly sur Seine (FR)
(72) Inventeur: Gaully, Bruno, 92300 Levallois Perret (FR); Hey, Lilian, 95450 Seraincourt (FR); Bourboun, Francis, 92100 Boulogne (FR)
(74) Mandataire: Thinat, Michel

(56) Documents cités:
- DE-A- 2 336 784
- DE-A- 10 027 419
- DE-A- 19 956 741
- US-A- 5 845 536

## Description

L'invention concerne en général les véhicules automobiles et les dispositifs de commande de boîtes de vitesses de ces véhicules, comme révélé dans DE 10027419A, et correspondant au préambule de la revendication 1.

Plus précisément, l'invention concerne selon un premier aspect un véhicule automobile comprenant une boîte de vitesses dotée d'une pluralité de configurations de fonctionnement correspondant à des rapports de démultiplication différents, et un dispositif de commande commandant sélectivement le passage de la boîte de vitesses d'une configuration de fonctionnement à une autre, le dispositif de commande comprenant un levier de commande mobile entre une pluralité de positions stables correspondant chacune à une configuration de fonctionnement de la boîte de vitesses, des moyens de maintien du levier de commande à ses positions stables, et au moins un organe de couplage lié au levier de commande et déplacé par ce levier de commande , le déplacement de l'organe de couplage entraînant le passage de la boîte de vitesses d'une configuration de fonctionnement à une autre.

Des véhicules de ce type sont connus de l'art antérieur, et comprennent généralement deux organes de couplage constitués de barres rigides, les moyens de maintien en position et de contrôle du levier de commande étant constitués de billages coopérant avec des encoches ménagées sur les barres. Ces billages définissent les positions stables du levier de commande.

Sur ces véhicules, le levier de commande présente des jeux importants à ses différentes positions stables. Ces jeux résultent de l'addition des tolérances sur les différents organes mécaniques du dispositif de commande et donnent à l'utilisateur un sentiment de non-qualité.

Par ailleurs, les vibrations créées par le fonctionnement du groupe moto-propulseur se propagent par le dispositif de commande jusqu'au levier de commande, ces vibrations étant désagréables à la longue pour l'utilisateur.

Une amélioration vis-à-vis de ce dernier problème consiste à remplacer les barres rigides des organes de couplage par des fils métalliques coulissant dans des gaines rigides fixées à la structure du véhicule. Les moyens de maintien en position sont des billages disposés dans la boîte de vitesses. Le jeu du levier de vitesses est encore accru, puisque le billage est déporté dans la boîte de vitesses et qu'il n'y a, entre la boîte de vitesses et le levier de commande, aucun point de maintien en position de la commande. Toutes les tolérances de fabrications entre le levier de commande et la boîte de vitesses s'additionnent pour générer un jeu encore plus important que dans la commande à barres rigides.

Dans ce contexte, la présente invention a pour but de pallier les défauts mentionnés ci-dessus, et de proposer un véhicule automobile équipé d'un dispositif de commande présentant un jeu minimum au levier de commande et permettant d'atténuer les vibrations du groupe moto-propulseur.

A cette fin, le véhicule de l'invention, par ailleurs conforme à la définition générique qu'en donne le préambule ci-dessus, est essentiellement caractérisé en ce que l'organe de couplage comprend une gaine rigide liée rigidement à un élément de structure du véhicule, et un câble souple lié au levier de commande et se déplaçant à l'intérieur de la gaine, et en ce que les moyens de maintien coopèrent directement avec le levier de commande.

Dans un mode de réalisation possible de l'invention, les moyens de maintien du levier de commande sont des moyens magnétiques.

Avantageusement, le levier de commande comprend une tige mobile relativement à l'élément de structure du véhicule, et un élément magnétique magnétisé suivant une première polarité et solidaire d'une extrémité inférieure de la tige, les moyens de maintien comprenant un dispositif magnétique solidaire de l'élément de structure coopérant avec l'élément magnétique.

De préférence, l'élément magnétique est mobile entre une pluralité de positions de référence correspondant aux positions stables du levier de commande, le dispositif magnétique comprenant une pluralité d'éléments magnétiques de fixation magnétisés suivant une seconde polarité opposée à la première et disposés en regard des positions de référence de l'élément magnétique.

Par exemple, les éléments magnétiques de fixation sont des premières pastilles présentant la forme de disques aplatis.

Avantageusement, le dispositif magnétique comprend des éléments magnétisés suivant la première polarité, et et formant une barrière magnétique autour de chacune des premières pastilles.

De préférence, l'élément magnétique passe d'une position de référence à une autre en suivant des tronçons de parcours prédéterminés, le dispositif magnétique comprenant une pluralité de pistes magnétiques s'étendant suivant lesdits tronçons de parcours.

Par exemple, les éléments magnétiques de fixation sont des segments des pistes magnétiques.

Avantageusement, les pistes magnétiques comprennent des segments de caractéristiques magnétiques différentes.

De préférence, l'élément magnétique est mobile le long d'une ligne centrale passant par une des positions de référence dite de point mort correspondant au point mort de la boîte de vitesses, et sur laquelle sont définies des positions de sélection, les autres positions de référence de l'élément magnétique, dites d'engagement, étant distribuées de part et d'autre de la ligne centrale, l'élément magnétique étant également mobile le long de lignes radiales reliant chacune des positions de référence d'engagement à une des positions de sélection ou à la position de point mort, le dispositif magnétique comprenant une piste magnétique centrale s'étendant le long de la ligne centrale et une pluralité de pistes magnétiques radiales s'étendant le long des lignes radiales.

Par exemple, la piste magnétique centrale comprend deux segments latéraux magnétisés suivant la première polarité disposés de part et d'autre de la position de point mort.

Avantageusement, les pistes magnétiques radiales comprennent chacune un segment d'extrémité constituant l'élément magnétique de fixation correspondant et un segment intermédiaire magnétisé suivant la première polarité et interposé entre le segment d'extrémité et la piste magnétique centrale.

De préférence, les pistes magnétiques sont des plasto-aimants.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue partielle en perspective d'un dispositif de commande de boîte de vitesses d'un véhicule selon l'art antérieur, et
- la figure 2 est une vue partielle en perspective d'un dispositif de commande d'un véhicule selon un premier mode de réalisation de l'invention,
- la figure 3 est une vue partielle en perspective, suivant l'incidence de la flèche III de la figure 2,
- la figure 4 est une vue en perspective agrandie d'un détail IV de la figure 3,
- la figure 5 est une vue partielle en perspective d'un dispositif de commande d'un véhicule selon un second mode de réalisation de l'invention, le levier de commande étant représenté dans plusieurs positions stables, et
- la figure 6 est une vue partielle en perspective, suivant l'incidence de la flèche VI de la figure 5.

L'invention vise un véhicule automobile comprenant une boîte de vitesses dotée d'une pluralité de configurations de fonctionnement correspondant à des rapports de démultiplication différents, et un dispositif de commande 10 commandant sélectivement le passage de la boîte de vitesses d'une configuration de fonctionnement à une autre.

Le dispositif de commande 10 comprend lui-même un levier de commande 20 mobile entre une pluralité de positions stables correspondant chacune à une configuration de fonctionnement de la boîte de vitesses, des moyens de maintien du levier de commande 20 à ses positions stables, et au moins un organe de couplage 30 lié au levier de commande 20 et déplacé par ce levier de commande 20, le déplacement de l'organe de couplage 30 entraînant le passage de la boîte de vitesses d'une configuration de fonctionnement à une autre.

La description qui va suivre est faite pour une boîte de vitesses manuelle à sept configurations de fonctionnement, ces configurations, et les positions stables correspondantes du levier de commande 20, correspondant aux cinq rapports de marche avant, à la marche arrière et au point mort.

Le dispositif de commande 10 comprend deux organes de couplage 30, l'un pour la sélection et l'autre pour le passage des rapports.

Selon l'invention, les organes de couplage 30 comprennent chacun une gaine rigide 31 liée rigidement à un élément de structure 1 du véhicule, et un câble souple 32 lié au levier de commande 20 et se déplaçant à l'intérieur de la gaine 31, les moyens de maintien coopérant directement avec le levier de commande 20.

Les moyens de maintien du levier de commande 20 sont des moyens magnétiques.

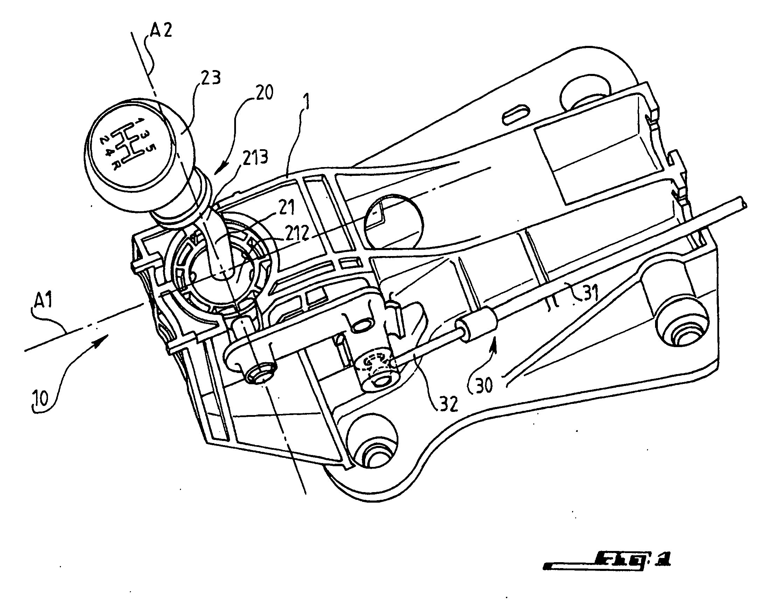

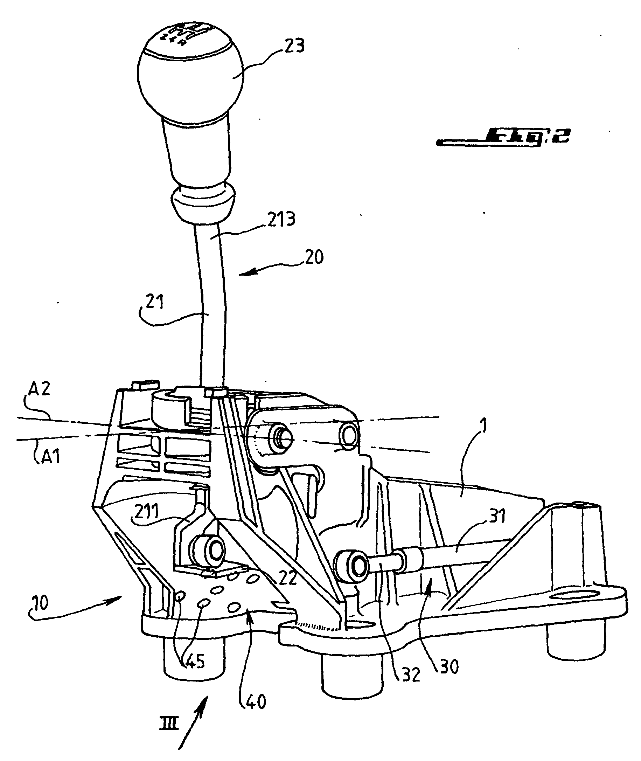

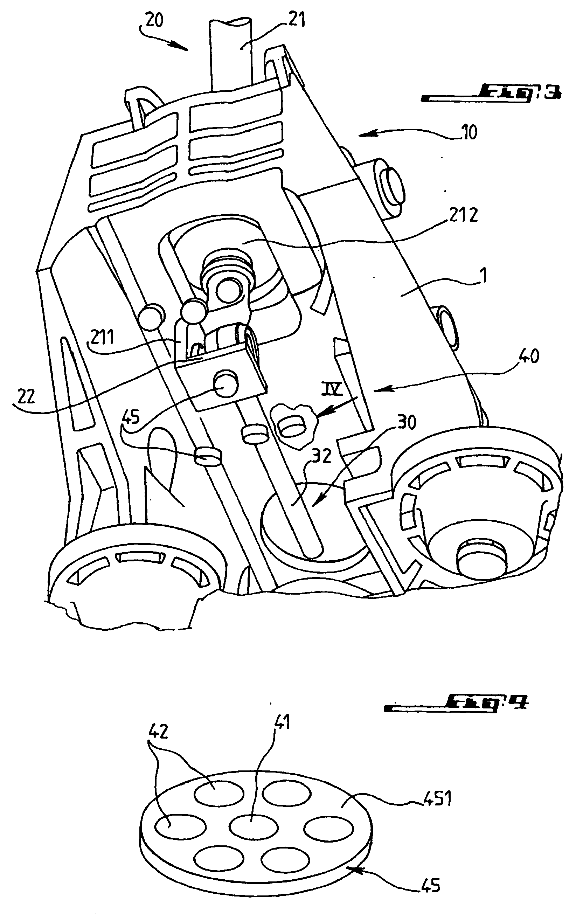

Comme le montrent les figures 2 et 3, le levier de commande 20 comprend une tige 21 mobile relativement à l'élément de structure 1 du véhicule, et un élément magnétique 22 magnétisé suivant une première polarité et solidaire d'une extrémité inférieure 211 de la tige 21, les moyens de maintien comprenant un dispositif magnétique 40 solidaire de l'élément de structure 1 coopérant avec l'élément magnétique 22.

L'élément magnétique 22 est mobile entre une pluralité de positions de référence correspondant aux positions stables du levier de commande 20, le dispositif magnétique 40 comprenant une pluralité d'éléments magnétiques de fixation, magnétisés suivant une seconde polarité opposée à la première, et disposés en regard des positions de référence de l'élément magnétique 22.

Les éléments magnétiques de fixation sont disposés à proximité immédiate des positions de référence de l'élément magnétique 22, de telle sorte qu'une force magnétique d'attraction s'exerce entre l'élément magnétique 22 dans sa position de référence et l'élément magnétique de fixation correspondant. Le levier de commande 20 est maintenu en position par cette force d'attraction magnétique.

Plus précisément, le levier de commande 20 est lié à l'élément de structure 1 par une liaison rotule et par des moyens de guidage.

Le levier 20 est articulé par la liaison rotule autour d'un point d'articulation 212 situé dans une partie centrale de la tige 21.

Les moyens de guidage, non représentés, autorisent la rotation de la tige 21 relativement à la structure 1 autour de premier et second axes A1 et A2, mutuellement perpendiculaires et liés au levier de commande 20.

Le levier de commande 20 comprend également un pommeau 23 solidaire d'une extrémité supérieure 213 de la tige 21, opposée à l'extrémité inférieure 211 portant l'élément magnétique 22.

La position stable de point mort du levier de commande 20 correspond à une position de référence de point mort de l'élément magnétique 22.

Les autres positions de référence de l'élément magnétique 22 sont appelées les positions de référence d'engagement et correspondent aux cinq rapports de marche avant et à la marche arrière.

L'élément magnétique 22 est mobile le long d'une ligne centrale passant par la position de référence de point mort et sur laquelle sont définies des positions de sélection.

Un déplacement de l'élément magnétique 22 le long de cette ligne centrale correspond à une rotation du levier de commande 20 autour de l'axe A1 d'un côté ou de l'autre du point mort.

Les positions de référence d'engagement de l'élément magnétique 22 sont distribuées de part et d'autre de cette ligne centrale.

L'élément magnétique 22 est également mobile le long de lignes radiales reliant chacune des positions de référence d'engagement à une des positions de sélection ou à la position de point mort.

Un déplacement de l'élément magnétique 22 le long d'une des lignes radiales correspond à une rotation du levier de commande 20 autour de l'axe A2.

Les lignes centrale et radiales sont des arcs de cercles centrés sur le point d'articulation 212.

Dans l'exemple de distribution des positions de référence représenté sur la figure 3, la ligne centrale comprend des première et seconde positions de sélection, disposées de part et d'autre du point mort. Les six positions de référence d'engagement sont distribuées trois de chaque côté de la ligne centrale.

Deux premières lignes radiales, s'étendant en sens opposés à partir de la ligne centrale, relient la première position de sélection à deux positions de référence disposées de part et d'autre de la ligne centrale.

Deux secondes lignes radiales, s'étendant en sens opposés à partir de la ligne centrale, relient le point mort à deux positions de référence disposées de part et d'autre de la ligne centrale.

Enfin, deux troisièmes lignes radiales, s'étendant en sens opposés à partir de la ligne centrale, relient la seconde position de sélection à deux positions de référence disposées de part et d'autre de la ligne centrale.

Selon un premier mode de réalisation de l'invention, représenté sur les figures 2 à 4, les éléments magnétiques de fixation sont des premières pastilles 41, présentant la forme générale de disques aplatis.

Le dispositif magnétique 40 comprend également des éléments magnétisés suivant la première polarité formant une barrière magnétique autour de chacune des premières pastilles 41.

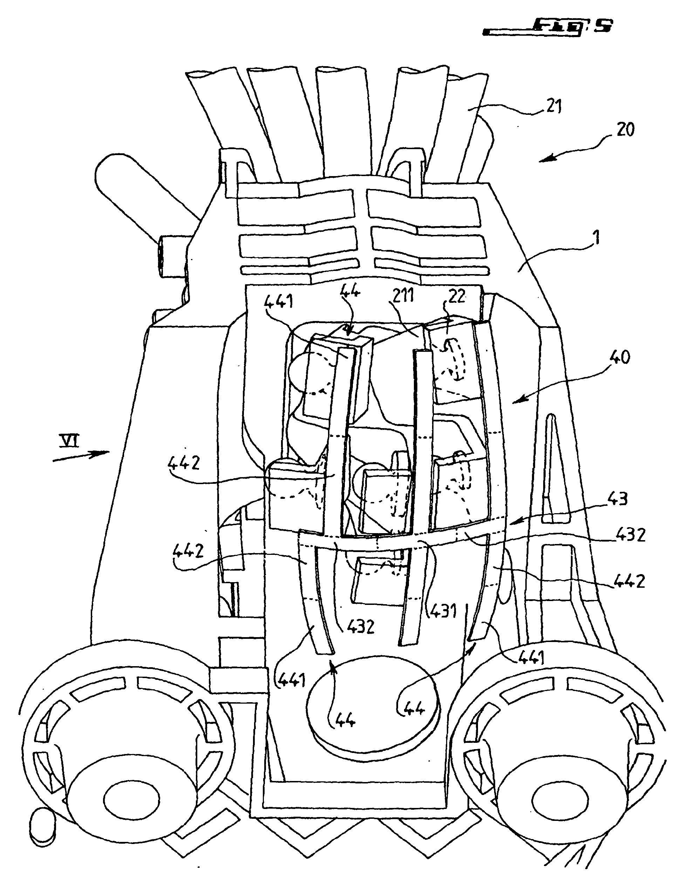

Dans la variante de réalisation de la figure 4, chaque élément formant barrière magnétique comprend une pluralité de deuxièmes pastilles 42, magnétisées suivant la première polarité, et disposées en couronne autour de chacune des premières pastilles 41. Ces deuxièmes pastilles 42 présentent également la forme générale de disques aplatis.

Les premières pastilles 41 sont fixées chacune à plat, au centre d'une face plane axiale 451 d'un support 45 en forme de disque. Les premières pastilles 41 reposent par des faces axiales inférieures sur la face plane 451. Les secondes pastilles 42 associées à la première pastille 41 sont également fixées à plat sur le même support 45. Elles reposent par des faces axiales inférieures respectives sur la face plane 451.

Ces deuxièmes pastilles 42 contribuent à maintenir l'élément magnétique 22 en position, puisqu'elles repoussent l'élément magnétique 22 vers le centre du support 45. L'élément magnétique 22 doit ainsi franchir une barrière de potentiel importante pour quitter sa position de référence.

Les faces 451 des supports 45 portant les premières et deuxièmes pastilles 41 et 42 sont tournées vers le point d'articulation 212 du levier de commande 20.

Ces supports 45 sont rigidement liés à l'élément de structure 1 par des moyens non représentés, ces moyens étant par exemple une plaque métallique solidarisée de l'élément de structure 1 par soudage, sur laquelle les supports 45 sont eux-mêmes soudés.

Les premières et deuxièmes pastilles 41 et 42 sont avantageusement des plasto-aimants, constitués d'une matrice synthétique dans laquelle une poudre magnétique est dispersée. Cette matrice peut être constituée par un thermoplastique, une résine thermodurcissable ou un élastomère synthétique.

Les premières et deuxièmes pastilles 41 et 42 sont fixées sur le support 45 par tout moyen adapté, comme par exemple le collage ou le sertissage.

Dans une deuxième variante de réalisation, non représentée, chaque élément formant barrière magnétique autour d'une première pastille 41 présente la forme d'une couronne aplatie entourant la première pastille, magnétisée suivant suivant la première polarité.

La première pastille 41 et la couronne forment un plasto-aimant unique, en forme de disque de faible épaisseur, fixé à plat sur la face plane 451 du support 45.

La première pastille 41 remplit complètement l'espace centrale libre de la couronne. La première pastille 41 et la couronne présentent la même épaisseur.

La couronne joue le même rôle que les deuxièmes pastilles 42 de la variante précédente.

L'élément magnétique 22 peut également être un plasto-aimant, fixé par collage, clippage ou tout autre moyen sur la tige 21.

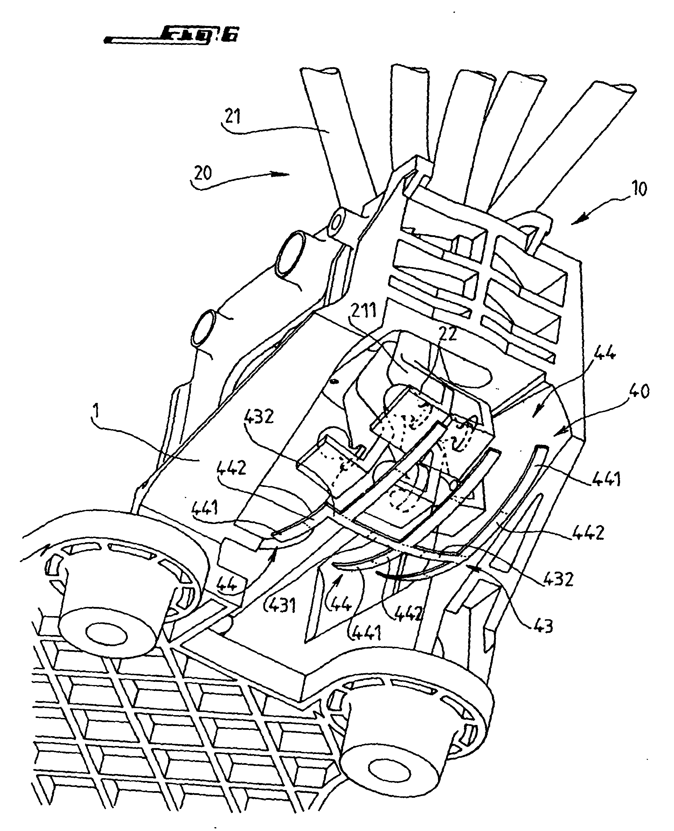

Dans un deuxième mode de réalisation de l'invention, représenté sur les figures 5 et 6, le dispositif magnétique 40 comprend une pluralité de pistes magnétiques s'étendant suivant le parcours que l'élément magnétique 22 suit en passant d'une position de référence à une autre.

Ces pistes magnétiques présentent la forme de bandes d'épaisseurs très faibles s'étendant chacune suivant une direction longitudinale, de largeur transversale constante. Elles sont chacune constituées de segments longitudinaux de caractéristiques magnétiques différentes, ces segments étant raccordés bout à bout pour constituer la piste. Les éléments magnétiques de fixation constituent un des segments des pistes magnétiques.

Plus précisément, le dispositif magnétique 40 comprend une piste magnétique centrale 43 s'étendant le long de la ligne centrale et une pluralité de pistes magnétiques radiales 44 s'étendant le long des lignes radiales.

Ces pistes magnétiques sont disposées de telle sorte que l'élément magnétique 22, au cours de ses déplacements, reste toujours à proximité immédiate des pistes. Les pistes magnétiques centrale et radiales 43 et 44 présentent donc la forme d'arcs de cercles centrés sur le point d'articulation 212 du levier de commande 20. Une force magnétique s'exerce constamment entre les pistes magnétiques et l'élément magnétique 22, cette force étant une force d'attraction ou de répulsion en fonction des caractéristiques magnétiques du segment en regard duquel se trouve l'élément magnétique 22.

La piste magnétique centrale 43 comprend un segment central 431 constituant l'élément magnétique de fixation associé au point mort, et deux segments latéraux 432 magnétisés suivant la première polarité disposés de part et d'autre du segment central 431.

Les pistes magnétiques radiales 44 comprennent chacune un segment d'extrémité 441 constituant un élément magnétique de fixation, et un segment intermédiaire 442 magnétisé suivant la première polarité et interposé entre le segment d'extrémité 441 et la piste magnétique centrale.

L'élément magnétique 22 est ainsi maintenu à ses positions de référence par la force d'attraction exercée par le segment constituant l'élément magnétique de fixation.

L'élément magnétique 22 est maintenu au point mort par la force d'attraction du segment central 431, par les segments latéraux 432 qui repoussent l'élément magnétique 22 vers le point mort et constituent une barrière de potentiel limitant les déplacements de l'élément magnétique 22 suivant la ligne centrale, et par les segments intermédiaires 442 qui repoussent l'élément magnétique 22 vers le point mort et constituent une barrière de potentiel limitant les déplacements de l'élément magnétique 22 suivant les lignes radiales partant du point mort.

De même, les segments intermédiaires 442 participent au maintien de l'élément magnétique 22 à ses positions de référence d'engagement car ils exercent sur lui une force de répulsion que l'élément magnétique 22 doit vaincre pour quitter les positions de référence d'engagement.

Les pistes magnétiques sont des plasto-aimants. Chaque segment des pistes magnétiques peut être fabriqué de façon indépendante, les segments étant ensuite solidarisés, par exemple par collage sur une baguette de support. On peut alors facilement faire varier la matrice, le type de poudre magnétique utilisé, la densité de poudre magnétique, et les caractéristiques magnétiques de chaque segment.

Chaque piste magnétique peut également être réalisée d'une seule pièce, la matrice étant alors commune à tous les segments. Le type de poudre magnétique, la densité de cette poudre magnétique, et les caractéristiques magnétiques peuvent varier suivant les segments.

Sur les figures 5 et 6, les limites entre les différents segments des pistes magnétiques sont représentées par des traits pointillés.

Les pistes magnétiques sont fixées sur une plaque, par exemple par collage, par sertissage ou par clippage, et cette plaque est elle-même solidarisée de l'élément de structure 1, par exemple par soudage ou vissage.

On comprend donc bien que le dispositif de commande décrit ci-dessus est particulièrement avantageux. L'utilisation de câbles gainés comme organes de commande permet de rendre la commande souple, ses modes propres de vibrations étant alors en dehors du spectre d'excitation du groupe moto-propulseur, qui se situe en dessous de 30 Hertz.

Par ailleurs, le levier de commande est maintenu en position par un dispositif magnétique coopérant avec un élément aimanté porté directement par le levier. Les tolérances mécaniques des éléments du dispositif de commande situés en aval du levier de commande, entre le levier et la boîte de vitesses, n'ont plus d'influence sur le jeu du levier de commande dans ses positions stables. Ce jeu est fortement réduit.

L'utilisation d'un dispositif de maintien magnétique est également très avantageuse. Il permet un maintien très précis du levier de commande à ses positions stables, réduisant encore le jeu de ce levier.

Ce dispositif ne s'use pas, puisqu'il n'y a pas de frottement ni de contact entre le levier de commande et les pastilles ou les pistes aimantées.

Enfin, toujours parce qu'il n'y a ni frottement ni contact entre le levier de commande et les pastilles ou les pistes aimantées, le positionnement de l'élément magnétique relativement au dispositif magnétique ne doit pas impérativement être très précis. Une tolérance assez élevée sur le positionnement de ces divers éléments ne nuit pas aux performances de la commande, ce qui facilite le montage.

On peut souligner que le dispositif de commande décrit ci-dessus peut être adapté, sans sortir du cadre de l'invention, à des boîtes à plus ou moins de 6 rapports, manuelles, automatiques ou pilotées.

Les positions de références de l'élément magnétique porté par le levier de commande peuvent également être distribuées de différentes manières sans sortir du cadre de l'invention, par exemple quatre d'un côté de la ligne centrale et deux de l'autre.

## Revendications

1. Véhicule automobile comprenant une boîte de vitesses dotée d'une pluralité de configurations de fonctionnement correspondant à des rapports de démultiplication différents, et un dispositif de commande (10) commandant sélectivement le passage de la boîte de vitesses d'une configuration de fonctionnement à une autre, le dispositif de commande (10) comprenant un levier de commande (20) mobile entre une pluralité de positions stables correspondant chacune à une configuration de fonctionnement de la boîte de vitesses, des moyens de maintien du levier de commande (20) à ses positions stables, et au moins un organe de couplage (30) lié au levier de commande (20) et déplacé par ce levier de commande (20), le déplacement de l'organe de couplage (30) entraînant le passage de la boîte de vitesses d'une configuration de fonctionnement à une autre, l'organe de couplage (30) comprenant une gaine rigide (31) liée rigidement à un élément de structure (1) du véhicule, et un câble souple (32) lié au levier de commande (20) et se déplaçant à l'intérieur de la gaine (31), les moyens de maintien coopérant directement avec le levier de commande (20), **caractérisé en ce que** les moyens de maintien du levier de commande (20) comprennent un dispositif magnétique (40) solidaire de l'élément de structure (1) et coopérant avec un élément magnétique (22) magnétisé suivant une première polarité et solidaire d'une extrémité inférieure (211) d'une tige (21) du levier de commande (20) mobile relativement à l'élément de structure (1).

2. Véhicule selon la revendication 1, **caractérisé en ce que** l'élément magnétique (22) est mobile entre une pluralité de positions de référence correspondant aux positions stables du levier de commande (20), le dispositif magnétique (40) comprenant une pluralité d'éléments magnétiques de fixation magnétisés suivant une seconde polarité opposée à la première et disposés en regard des positions de référence de l'élément magnétique (22).

3. Véhicule selon la revendication 2, **caractérisé en ce que** les éléments magnétiques de fixation sont des premières pastilles (41) présentant la forme de disques aplatis.

4. Véhicule selon la revendication 3, **caractérisé en ce que** le dispositif magnétique (40) comprend des éléments magnétisés suivant la première polarité, et formant une barrière magnétique autour de chacune des premières pastilles (41).

5. véhicule selon l'une des revendications précédentes, **caractérisé en ce que** l'élément magnétique (22) passe d'une position de référence à une autre en suivant des tronçons de parcours prédéterminés, le dispositif magnétique (40) comprenant une pluralité de pistes magnétiques s'étendant suivant lesdits tronçons de parcours.

6. véhicule selon la revendication 5, **caractérisé en ce que** les éléments magnétiques de fixation sont des segments des pistes magnétiques.

7. Véhicule selon la revendication 5 ou 6, **caractérisé en ce que** les pistes magnétiques comprennent des segments de caractéristiques magnétiques différentes.

8. véhicule selon l'une quelconque des revendication 5 à 7, **caractérisé en ce que** l'élément magnétique (22) est mobile le long d'une ligne centrale passant par une des positions de référence dite de point mort correspondant au point mort de la boîte de vitesses, et sur laquelle sont définies des positions de sélection, les autres positions de référence de l'élément magnétique (22) étant distribuées de part et d'autre de la ligne centrale, l'élément magnétique (22) étant également mobile le long de lignes radiales reliant chacune des autres positions de référence à une des positions de sélection ou à la position de point mort, le dispositif magnétique (40) comprenant une piste magnétique centrale (43) s'étendant le long de la ligne centrale et une pluralité de pistes magnétiques radiales (44) s'étendant le long des lignes radiales.

9. Véhicule selon la revendication 8, **caractérisé en ce que** la piste magnétique centrale (43) comprend deux segments latéraux (432) magnétisés suivant la première polarité disposés de part et d'autre de la position de point mort.

10. véhicule selon la revendication 8 ou 9, **caractérisé en ce que** les pistes magnétiques radiales (44) comprennent chacune un segment d'extrémité (441) constituant l'élément magnétique de fixation correspondant et un segment intermédiaire (442) magnétisé suivant la première polarité et interposé entre le segment d'extrémité (441) et la piste magnétique centrale (43).

11. véhicule selon l'une quelconque des revendications 5 à 10, **caractérisé en ce que** les pistes magnétiques sont des plasto-aimants.

## Claims

1. Motor vehicle comprising a gear box, equipped with a multiplicity of operating configurations corresponding to different gear ratios, and a control device (10), selectively controlling the gear box passing from one operating configuration to another, the control device (10) comprising a control lever (20) which can move between a multiplicity of stable positions, each corresponding to an operating configuration of the gear box, means of maintaining the control lever (20) in its stable positions and at least one coupling unit (30), which is connected to the control lever (20) and moved by this control lever (20), the movement of the coupling unit (30) involving the gear box passing from one operating configuration to another, the coupling unit (30) comprising a rigid tube (31), which is rigidly connected to a structural element (1) of the vehicle, and a flexible cable (32), which is connected to the control lever (20), moving inside the tube (31), the means of maintaining cooperating directly with the control lever (20), **characterised in that** the means of maintaining the control lever (20) comprise a magnetic device (40), which is integral with the structural element (1), cooperating with a magnetic element (22), which is magnetised according to a first polarity and integral with a lower end (211) of a rod (21) of the control lever (20), which can move in relation to the structural element (1).

2. Vehicle according to claim 1, **characterised in that** the magnetic element (22) can move between a multiplicity of reference positions corresponding to the stable positions of the control lever (20), the magnetic device (40) comprising a multiplicity of magnetic elements for fixing, which are magnetised according to a second polarity opposed to the first, arranged with reference to the reference positions of the magnetic element (22).

3. Vehicle according to claim 2, **characterised in that** the magnetic elements for fixing are first pellets (41) in the shape of flattened discs.

4. Vehicle according to claim 3, **characterised in that** the magnetic device (4) comprises elements, which are magnetised according to the first polarity, forming a magnetic barrier around each of the first pellets (41).

5. Vehicle according to one of the previous claims, **characterised in that** the magnetic element (22) passes from one reference position to another according to predetermined route sections, the magnetic device (40) comprising a multiplicity of magnetic tracks extending according to these route sections.

6. Vehicle according to claim 5, **characterised in that** the magnetic elements for fixing are segments of the magnetic tracks.

7. Vehicle according to claim 5 or 6, **characterised in that** the magnetic tracks comprise segments with different magnetic characteristics.

8. Vehicle according to any one of claims 5 to 7, **characterised in that** the magnetic element (22) can move along a central line, passing through one of the reference positions called dead centres corresponding to the dead centre of the gear box, on which the selection positions are defined, the other reference positions of the magnetic element (22) being distributed on either side of the central line, the magnetic element (22) also being able to move along radial lines connecting each of the other reference positions to one of the selection positions or the dead centre position, the magnetic device (40) comprising a central magnetic track (43) extending along the central line and a multiplicity of radial magnetic tracks (44) extending along radial lines.

9. Vehicle according to claim 8, **characterised in that** the central magnetic track (43) comprises two lateral segments (432), which are magnetised according to the first polarity, arranged on either side of the dead centre position.

10. Vehicle according to claim 8 or 9, **characterised in that** the radial magnetic tracks (44) each comprise an end segment (441), forming the corresponding magnetic element for fixing, and an intermediate segment (442), which is magnetised according to the first polarity, interposed between the end segment (441) and the central magnetic track (43).

11. Vehicle according to any one of claims 5 to 10, **characterised in that** the magnetic tracks are plasto-magnets.

## Patentansprüche

1. Kraftfahrzeug, das ein Getriebe mit einer Vielzahl von Funktionsanordnungen entsprechend verschiedenen Untersetzungsverhältnissen und eine Steuervorrichtung (10) aufweist, die wahlweise den Übergang des Getriebes von einer Funktionsanordnung zu einer anderen steuert, wobei die Steuervorrichtung (10) einen zwischen einer Vielzahl von jeweils einer Funktionsanordnung des Getriebes entsprechenden stabilen Positionen beweglichen Bedienhebel (20), Mittel zur Fixierung des Bedienhebels (20) in seinen stabilen Positionen und mindestens ein Kopplungsorgan (30) in Verbindung mit dem Bedienhebel (20), das durch den genannten Bedienhebel (20) bewegt wird, aufweist, wobei die Bewegung des Kopplungsorgans (30) bewirkt, dass das Getriebe von einer Funktionsanordnung zu einer anderen übergeht, wobei das Kopplungsorgan (30) eine starr mit einem Strukturelement (1) des Fahrzeuges verbundene feste Hülle (31) und ein elastisches Seil (32) aufweist, das mit dem Bedienhebel (20) verbunden ist und sich im Inneren der Hülle (31) bewegt, und wobei die Mittel zur Fixierung direkt mit dem Bedienhebel (20) zusammenwirken, **dadurch gekennzeichnet, dass** die Mittel zur Fixierung des Bedienhebels (20) eine magnetische Vorrichtung aufweisen, die mit dem Strukturelement (1) fest verbunden ist und mit einem Magnetelement (22) zusammenwirkt, das nach einer ersten Polarität magnetisiert wurde und mit einem unteren Ende (211) einer relativ zum Strukturelement (1) beweglichen Stange (21) des Bedienhebels (20) fest verbunden ist.

2. Fahrzeug nach Anspruch 1, **dadurch gekennzeichnet, dass** das Magnetelement (22) zwischen einer Vielzahl von Referenzpositionen beweglich ist, die den stabilen Positionen des Bedienhebels (20) entsprechen, wobei die Magnetvorrichtung (40) eine Vielzahl von magnetischen Fixierelementen aufweist, die nach einer zweiten, der ersten entgegengesetzten Polarität magnetisiert werden, und entsprechend den Referenzpositionen des Magnetelements (22) angeordnet sind.

3. Fahrzeug nach Anspruch 2, **dadurch gekennzeichnet, dass** die magnetischen Fixierelemente erste Plättchen (41) sind, die die Form von abgeflachten Scheiben aufweisen.

4. Fahrzeug nach Anspruch 3, **dadurch gekennzeichnet, dass** die Magnetvorrichtung (40) Magnetelemente aufweist, die nach einer ersten Polarität magnetisiert werden und um jedes der ersten Plättchen (41) herum eine magnetische Barriere bilden.

5. Fahrzeug nach einem der vorstehenden Ansprüche, **dadurch gekennzeichnet, dass** das Magnetelement (22) von einer Referenzposition zu einer anderen übergeht und dabei vorbestimmten Wegabschnitten folgt, wobei die Magnetvorrichtung (40) eine Vielzahl von magnetischen Spuren aufweist, die sich entsprechend den genannten Wegabschnitten erstrecken.

6. Fahrzeug nach Anspruch 5, **dadurch gekennzeichnet, dass** die magnetischen Fixierelemente Abschnitte der Magnetspuren sind.

7. Fahrzeug nach Anspruch 5 oder 6, **dadurch gekennzeichnet, dass** die Magnetspuren Abschnitte mit unterschiedlichen magnetischen Eigenschaften aufweisen.

8. Fahrzeug nach einem der Ansprüche 5 bis 7, **dadurch gekennzeichnet, dass** das Magnetelement (22) längs einer Mittellinie beweglich ist, die entsprechend dem Totpunkt des Getriebes durch eine der Referenzpositionen mit der Bezeichnung Totpunkt verläuft und auf der Wählpositionen definiert werden, wobei die anderen Referenzpositionen des Magnetelements (22) beiderseits der Mittellinie verteilt sind und das Magnetelement (22) auch längs radialer Linien beweglich ist, die die jeweils anderen Referenzpositionen mit einer der Wählpositionen oder mit der Totpunktposition verbinden, wobei die Magnetvorrichtung (40) eine sich längs der Mittellinie erstreckende zentrale Magnetspur (41) sowie eine Vielzahl von sich längs der radialen Linien erstreckenden radialen Magnetspuren (44) aufweist.

9. Fahrzeug nach Anspruch 8, **dadurch gekennzeichnet, dass** die zentralen Magnetspuren (43) zwei seitliche Abschnitte (432) aufweisen, die nach einer ersten Polarität magnetisiert werden und beiderseits der Totpunktposition angeordnet sind.

10. Fahrzeug nach Anspruch 8 oder 9, **dadurch gekennzeichnet, dass** die radialen Magnetspuren (44) jeweils einen Endabschnitt (441), der das entsprechende magnetische Fixierelement bildet, sowie einen Zwischenabschnitt (442) aufweisen, der nach einer ersten Polarität magnetisiert wird und zwischen dem Endabschnitt (441) und der zentralen Magnetspur (43) angeordnet ist.

11. Fahrzeug nach einem der Ansprüche 5 bis 10, **dadurch gekennzeichnet, dass** die Magnetspuren Plastomagneten sind.
